# EUROPÄISCHE PATENTSCHRIFT

(11) **EP 1 069 508 B1**
(45) Veröffentlichungstag und Bekanntmachung des Hinweises auf die Patenterteilung: **15.06.2005**
(21) Anmeldenummer: 00114018.5
(22) Anmeldetag: 04.07.2000
(51) Int. Cl.: G06F 12/14, G06F 1/00

(54) **Während der Laufzeit veränderbare kryptographische Methode**
Cryptographic method modifiable during run time
Procédé cryptographique modifiable pendant l'exécution

(30) Priorität: 14.07.1999 DE 19932769
(43) Veröffentlichungstag der Anmeldung: 17.01.2001
(73) Patentinhaber: Röllgen, Bernd, 81673 München (DE)
(72) Erfinder: Röllgen, Bernd, 81673 München (DE)

(56) Entgegenhaltungen:
- DE-A- 19 735 922
- US-A- 4 316 055
- US-A- 5 222 139
- US-A- 5 425 103
- US-A- 5 675 652
- L'ECUYER P: "Uniform Random Number Generators: A Review" PROCEEDINGS OF THE WINTER SIMULATION CONFERENCE. ATLANTA, DEC. 7 - 10, 1997, NEW YORK, IEEE, US, 7. Dezember 1997 (1997-12-07), Seiten 127-134, XP010258514 ISBN: 0-7803-4278-X
- BRUCE SCHNEIER: "Angewandte Kryptographie" 1996 , ADDISON-WESLEY XP002248690 * Seite 17 - Seite 19 *
- KIM Y C; SALUJA K K: "SEQUENTIAL TEST GENERATORS: PAST, PRESENT AND FUTURE" INTEGRATION, THE VLSI JOURNAL, Bd. 26, Nr. 1/2, Dezember 1998 (1998-12), Seiten 41-54, XP000669599 AMSTERDAM, NL

## Beschreibung

Die Erfindung betrifft eine kryptographische Methode, die zu Beginn ihrer Laufzeit auf einem Computer oder einem Microcontroller nicht feststeht. Durch den Compilierprozeß eines Schlüssels wird ein Programmstück in Maschinensprache generiert, welches die kryptographische Methode während der Laufzeit eines kryptographischen Programms festlegt. Durch Änderung des Schlüssels und Neucompilierung kann das Programmstück in Maschinensprache während der Laufzeit eines kryptographischen Programms geändert werden.

Kryptographische Methoden sind seit der Antike bekannt und finden breite Anwendung vor allem in Computernetzen, bei Chipkarten und Kommunikationssystemen, um Nachrichten einer Gruppe von Empfängern zugänglich zu machen, Informationen während ihrer Übertragung zu schützen und um Daten zu authentisieren. Das internationale Bankenwesen und die Telekommunikationsindustrie benötigen schnelle und sichere Datenverschlüsselungsmethoden, um der ihnen auferlegten Geheimhaltungspflicht nachzukommen.

Bekannt sind Methoden, die sich der einfachen Substitution von Schriftzeichen bedienen, sowie Blockverschlüsselungsverfahren mit Permutationen, Additionen und Substitutionen von Bitgruppen einer mit einem Schlüssel verknüpften Nachricht. Ferner sind Methoden, die Rechenoperationen mit großen Zahlen durchführen, bei denen jedoch die Umkehrung der Rechenoperation mangels dafür geeigneter mathematischer Verfahren nur unter hohem Zeitaufwand bestimmbar ist, bekannt und finden breite Anwendung. Daneben existieren Methoden, die eine große Zahl von Schiebeoperationen langer Schlüssel durchführen oder Zufallszahlengeneratoren verwenden, um über die bitweise EXODER-Verknüpfung des resultierenden Schlüssels mit einer Nachricht deren Ver- und Entschlüsselung durchzuführen. Nahezu jedes bekannte Verfahren zur Berechnung eines Bitmusters, welches sich vom Bitmuster der ursprünglichen Nachricht unterscheidet, ist in der Kryptographie verwendbar. Aus diesem Grund existiert heute eine Flut von Algorithmen, die eine mehr oder weniger große kryptographische Sicherheit bieten.

Mit Durchmischung von zu verschlüsselnden Nachrichten und gestaffelter Ausführung unterschiedlicher kryptographischer Methoden wird in der Regel versucht, einzelne bekannte Schwächen der bekannten kryptographischen Methoden zu kaschieren. Eine bekannte Schwäche einer kryptographischen Methode kann zum Beispiel die Transparenz des Schlüssels in den verschlüsselten Daten sein oder ein zu kurzer Schlüssel, sodaß durch Probieren einer Anzahl möglicher Schlüssel die verschlüsselten Daten entschlüsselt werden können.

Vielen bekannten kryptographischen Methoden ist gemein, daß zu Beginn der Ausführung der Methoden auf einem Computersystem die Anordnung der Maschinenbefehle im Programmspeicher des Computersystems feststeht. Beim Versuch, eine bekannte kryptographische Methode zum Zwecke der Entschlüsselung von Daten zu brechen, wird das Probieren einer großen Anzahl möglicher Schlüssel auf einem oder mehreren spezialisierten Rechnern in endlicher Zeit zum Erfolg fuhren. Durch die Verlängerung des verwendeten Schlüssels kann in der Regel eine höhere Sicherheit erzielt werden, wodurch jedoch die zur Datenverschlüsselung benötigte Zeit im günstigsten Fall linear, meist jedoch quadratisch mit der Anzahl Schlüsselbits wächst. Für den Fall daß in der Zukunft eine Methode gefunden wird, mit der die Zahl der zum Brechen der kryptographischen Methode benötigten Versuche substantiell verringert wird, besteht ein erhebliches Sicherheitsrisiko für alle bereits mit dem Verfahren verschlüsselten Daten.
Läge hingegen der Ablauf voneinander abhängiger kryptographischer Prozesse nicht im vorhinein fest, so müßte beim Probieren verschiedener Schlüssel jede mögliche Kombination voneinander nichtlinearer kryptographischer Prozesse zusätzlich ausprobiert werden. Bei gleicher Schlüssellänge und Ausführungszeit wäre folglich das Probieren einer um den Faktor möglicher Kombinationen kryptographischer Prozesse größeren Anzahl Versuche erforderlich.

"Sequential Test Generators: Past, Present and Future" (Integration, The VLSI Joumal, Dec. 1998) von Yong Chang Kim and Kewal K. Saluja beschreibt eine Methode zur Erzeugung von Zufallszahlen zur Verwendung als Testmuster durch Algorithmen, die ihrerseits pseudozufällig generiert werden.

US5222139 beschreibt eine Methode zur Verschlüsselung, die die Merkmale des Oberbegriffs von Anspruch 1 beinhaltet.

Die im kennzeichnenden Teil von Patentanspruch 1 angegebenen Merkmale lösen die Aufgabe, eine alternative Methode zur Erzeugung von Pseudozufallszahlen für kryptographische Zwecke zu schaffen.

Durch einen Compilierprozeß eines Schlüssels wird ein Programmstück in Maschinensprache generiert, welches die kryptographische Methode während der Laufzeit oder eines Teils der Laufzeit eines kryptographischen Programms festlegt. Durch Änderung des Schlüssels und Neucompilierung der kryptographischen Methode kann das Programmfragment in Maschinensprache während der Laufzeit eines kryptographischen Programms geändert werden, wodurch die vorstehend geschilderten Nachteile nicht auftreten.

Dieses Problem wird durch die im Patentanspruch 1 aufgeführten Merkmale gelöst.

Eine erfindungsgemäße kryptographische Methode besteht aus einer begrenzten Zahl kryptographischer Programmfragmente, die in beliebiger Reihenfolge sequentiell ausgeführt werden können und den Inhalt eines Datenspeichers durch Permutationen, Divisionsrestberechnungen, Bitverschiebungen, Vertauschungen von Bitgruppen und anderer nichtlinearer Operationen oftmals verändern. Die Reihenfolge, in der die kryptographischen Programmfragmente ausgewählt werden, bestimmt bei vorteilhafter Ausführung ein mit einem Paßwort initialisierter Pseudo-Zufallszahlengenerator, welcher einen Compiler steuert, mit dem die kryptographischen Programmfragmente schließlich in Maschinenkode übersetzt werden. Bei der Ausführung des Maschinenkodes wird der Inhalt des Datenspeichers quasizufällig verwürfelt.
Die Überführung der zu verschlüsselnden Daten in die verschlüsselten Daten erfolgt beispielsweise durch logische EXODER-Verknüpfung der zu verschlüsselnden Daten mit dem Inhalt des Datenspeichers.

Der große Vorteil einer erfindungsgemäßen kryptographischen Methode liegt in der Erhöhung des zum Brechen einer vergleichbaren bekannten kryptographischen Methode, deren Maschinenkode bereits zu Beginn der Laufzeit festgelegt ist, erforderlichen Aufwands. Die Zahl dafür benötigter Versuche wächst exponentiell mit der Anzahl aneinandergereihter kryptographischer Programmfragmente, aus denen der Maschinenkode aufgebaut ist. Die kryptographischen Programmfragmente müssen beliebig austauschbar, nichtlinear sein und eine vergleichbare kryptographische Sicherheit aufweisen.
Überdies können bei vorteilhafter Ausführung kryptographischer Programmfragmente, aus denen der Maschinenkode aufgebaut ist, auf nahezu jedem bekannten Mikroprozessor innerhalb weniger Instruktionszyklen ausgeführt werden. Es kann somit bei Chipkartenanwendungen auf den Einsatz eines speziellen Schaltungsblocks für Verschlüsselungsoperationen verzichtet werden. Die vom Prozessorkern ausgeführten Programmfragmente des Maschinenkodes bieten durch die mit der Kodelänge des Maschinenkodes exponentiell wachsenden Zahl an Kombinationsmöglichkeiten eine ebenso expontentiell anwachsende Angriffssicherheit. Die Verarbeitungszeit des Maschinenkodes hingegen steigt lediglich linear mit der Kodelänge an.

Die begrenzte Zahl kryptographischer Programmfragmente, die vom Compiler aneinandergereiht werden, können auch andere kryptographische Operationen als Permutationen, Divisionsrestberechnungen, Bitverschiebungen und/oder Vertauschungen von Bitgruppen im Datenspeicher durchführen. Insbesondere CRC-Kodeberechnungen, die Berechnung nichtlinearer mathematischer Formeln und linear kongruente Zufallszahlberechnungen sind denkbar. Die dem Compiler zur Verfügung stehenden kryptographischen Programmfragmente sind dabei in Grenzen durch von der Eingabe gesteuerte Zuweisung von Konstanten und durch Anpassung der Arbeitsweise in Ihrer Funktion veränderbar.

Es ist des weiteren denkbar, daß die Ausführung des Maschinenkodes zur besseren Übertragbarkeit der kryptographischen Methode auf Rechner unterschiedlichen internen Aufbaus mit einem Interpretierer vollzogen wird. Die Ausführungsgeschwindigkeit des Maschinenkodes wird dadurch reduziert, jedoch kann bei einer vorteilhaften Ausführungsform einer erfindungsgemäßen kryptographischen Methode von der von Unterschieden in den Zentraleinheiten unterschiedlicher Rechner unabhängigen Interpretation des Maschinenkodes ausgegangen werden.

Es ist ferner denkbar, daß die kryptographische Methode in einem kryptographischen Programm auch als Generator für Quasizufallszahlen verwendet werden kann. Die Überführung der zu verschlüsselnden Daten in die verschlüsselten Daten durch logische EXODER-Verknüpfung der zu verschlüsselnden Daten mit dem Inhalt des Datenspeichers erfolgt dabei nicht, hingegen wird der Inhalt des Datenspeichers als Quasizufallszahl in einem kryptographischen Programm weiterverwendet.

Weitere Merkmale, Einzelheiten und Vorteile der Erfindung ergeben sich aus der beigefügten zeichnerischen Darstellung und nachfolgenden Beschreibung einer erfindungsgemäßen kryptographischen Methode. In der Zeichnung zeigt:

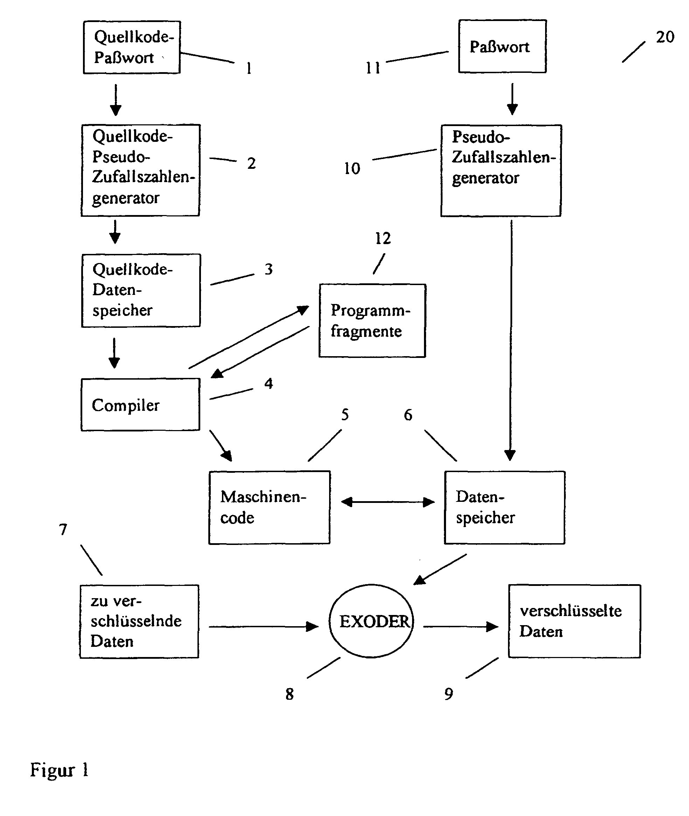

- Figur 1: eine schematische Darstellung einer Ausführungsform einer erfindungsgemäßen kryptographischen Methode

In dem Prinzipbild gemäß Figur 1 ist eine mit dem Bezugszeichen 20 bezeichnete kryptographische Methode dargestellt. Sie besteht aus einem durch die Eingabe des Quellkode-Paßworts 1 gesteuerten Quellkode-Pseudo-Zufallszahlengenerator 2, welcher eine Pseudozufallszahlenfolge erzeugt, die im Quellkodespeicher 3 zwischengespeichert wird und durch den Compiler 4 in Maschinenkode 5 umgewandelt wird. Der Maschinenkode 5 greift während der Ausführung auf den mit dem Bezugszeichen 6 bezeichneten Datenspeicher durch oftmalige Lese-/Schreiboperationen zu. Der Datenspeicher 6 ist mit einer durch das Paßwort 11 beeinflußten und im Pseudo-Zufallszahlengenerator 10 erzeugten Pseudozufallszahlenfolge initialisiert. Durch wiederholte Ausführung des Maschinenkodes 5, der bei Ausführung in einer Zentraleinheit eines Rechners eine große Anzahl Bits im Datenspeicher 6 vertauscht, permutiert und Datenworte im Datenspeicher 6 durch Divisionsrestberechnungen anderer Datenworte aus dem Datenspeicher 6 ersetzt, wird der komplette Inhalt des Datenspeichers 6 quasizufällig verwürfelt. Unter Zuhilfenahme der EXODER-Funktion 8 werden die zu verschlüsselnden Daten 7 durch Verknüpfung mit dem Inhalt des Datenspeichers 6 in die verschlüsselten Daten 9 überführt. Die logische EXODER-Funktion 8 kann sowohl blockweise, als auch in kleineren Datenpaketen wie Bytes, Worten oder Doppelworten auf die zu verschlüsselnden Daten 7 angewandt werden.

Bei der Entschlüsselung der verschlüsselten Daten 9 werden die verschlüsselten Daten 9 in umgekehrter Richtung mit dem Inhalt des Datenspeichers 6 durch die EXODER-Funktion 8 logisch verknüpft, um im Datenspeicher für zu verschlüsselnde Daten 7 die entschlüsselten Daten zu erhalten. Das Quellkode-Paßwort 1, als auch das Paßwort 11 müssen sowohl beim Verschlüsselungsvorgang als auch beim Entschlüsseln identisch sein. Andernfalls ergibt sich bei Ausführung des Maschinenkodes 5 in einer Zentraleinheit eines Rechners mit hoher Sicherheit nicht der gleiche Dateninhalt im Datenspeicher 6 und es kommt zu einer fehlerhaften Überführung der verschlüsselten Daten 9 über die umgekehrt angewandte EXODER-Funktion 8 in die entschlüsselten Daten im Datenspeicher für zu verschlüsselnde Daten 7.

Aufgrund der Tatsache, daß erst nach Bekanntheit des Paßworts 1 Rückschlüsse auf den kryptographischen Algorithmus gezogen werden können, erhöht sich die Sicherheit von damit verschlüsselten Daten um einen Faktor, der durch die Anzahl nichtlinearer Kombinationen kryptographischer Programmfragmente 12, die vom Compiler 4 aneinandergereiht werden, bestimmt wird. Bilden bei einer vorteilhaften Ausführung Permutationen, Divisionsrestberechnungen, Bitverschiebungen und Vertauschungen von Bitgruppen den Satz möglicher Programmfragmente 12, so kann jedes der vier Programmfragmente 12 jedem der vier Programmfragmente 12 folgen. Die Anzahl möglicher Kombinationen errechnet sich folglich aus dem Vorrat an Programmfragmenten 12 potenziert um die Anzahl aneinandergefügter Programmfragmente 12. Werden beispielsweise n=16 Programmfragmente 12 aus einer Menge von vier möglichen Programmfragmente 12 mit dem Compiler 4 compiliert und in den Maschinenkode 5 überführt, wird eine von 4ⁿ = 4¹⁶ = 2³² = 4294967296 Möglichkeiten festgelegt, ohne die Laufzeit des Maschinenkodes 5 bei Ausführung in einer Zentraleinheit eines Rechners zu beeinflussen. Es ist jedoch zu fordern, daß eine Mindestanzahl Programmfragmente 12 aneinandergefügt werden, um die Bits im Datenspeicher 7 ausreichend zu verwürfeln. Bei vorteilhafter Ausführung werden mehr als 512 Programmfragmente 12 aneinandergefügt. Es ergeben sich in diesem Falle 4⁵¹² = 2¹⁰²⁴ = 1,7977 * 10³⁰⁸ mögliche Kombinationen für den Maschinenkode 5.

## Patentansprüche

1. Methode zur Erzeugung einer Pseudozufallszahl für kryptographische Zwecke mit den Schritten:
- wiederholbares Übersetzen, Generieren und Aneinanderreihen einer begrenzten Zahl von kryptographischen Programmfragmenten (12) durch einen Compiler (4),
- wobei der Quellkode mittels eines Quellkode-Pseudozufallszahlengenerators (2) in Abhängigkeit eines änderbaren Quellkode-Paßworts (1) generiert und in einem Quellkode-Datenspeicher (3) gespeichert wird, und
- wobei die Programmfragmente (12) als generierter Maschinenkode (5) aneinandergereiht werden, und
- wobei dieser Maschinenkode (5) Permutationen, Divisionsrestberechnungen, Bitverschiebungen und/oder Vertauschungen von Bitgruppen in einem Datenspeicher (6) durchführt
**gekennzeichnet durch**
- die Initialisierung dieses Datenspeichers (6) mit einer **durch** ein weiteres Paßwort (11) gesteuerten und in einem weiteren Pseudozufallszahlengenerator (10) erzeugten Pseudozufallszahlenfolge
- ein- oder mehrmaliges Ausführen dieses vom Compiler (4) erzeugten Maschinenkodes (5) in der Zentraleinheit eines Rechners zur Erzeugung einer Pseudozufallszahl für kryptographische Zwecke

2. Während der Laufzeit veränderbare kryptographische Methode (20) nach Anspruch 1, **dadurch gekennzeichnet, daß** die Ausführung des Maschinenkodes (5) durch einen Interpretierer durchgeführt werden kann.

3. Während der Laufzeit veränderbare kryptographische Methode (20) nach einem der Ansprüche 1 bis 2,
die **dadurch gekennzeichnet, daß** begrenzte Zahl kryptographischer Programmfragmente (12), die vom Compiler (4) aneinandergereiht werden, auch andere kryptographische Operationen als Permutationen, Divisionsrestberechnungen, Bitverschiebungen und/oder Vertauschungen von Bitgruppen im Datenspeicher (6) durchführen können, insbesondere CRC-Kodeberechnungen, die Berechnung nichtlinearer mathematischer Formeln und linear kongruente Zufallszahlenberechnungen.

## Claims

1. Method for generation of a pseudo random number for cryptographic purposes with the steps:
- repeatable translation, generation and assembling of a limited number of cryptographic program fragments (12) by a compiler (4),
- wheras the source code is being generated using a source code pseudorandom number generator (2) with dependance on an alterable source code password (1) and being stored in a source code data memory (3), and
- whereas the program fragments (12) are being assembled as generic machine code (5), and
- whereas this machine code (5) executes permutations, division modulo computations, bit shifts and/or permutations of bit groups in a data memory (6)
**characterized by**
- the initialization of this data memory (6) by a pseudo random number sequence that is generated by another pseudorandom number generator (10), which is controlled by another password (11)
- one time or repeated execution of this compiler (4) generated machine code (5) in the central processing unit of a computer for the generation of a pseudorandom number for cryptographic purposes

2. Method for generation of a pseudo random number for cryptographic purposes as recited in claim 1
wherein execution of the machine code (5) can be carried out by an interpreter.

3. Method for generation of a pseudo random number for cryptographic purposes as recited in claim 1 or 2,
wherein the limited number of cryptographic program fragments (12), which are assembled by the compiler (4), can as well execute other cryptographic operations than permutations, division modulo computations, bit shifts and/or permutations of bit groups in a data memory (6); in particular CRC code calculations, computation of non-linear mathematic formulas and linear congruential random number calculations.

## Revendications

1. Méthode de génération de nombres pseudo aléatoires pour des buts cryptographiques suivant les étapes décrites ci-dessous:
- traduction, génération et assemblage répétable d'un nombre limité de fragments de programme (12) cryptographiques par un compilateur (4),
- où le code source étant générer en utilisant le code source de générateur de nombres pseudo aléatoires (2) dépendamment d'un mot de passe de code source stocké dans la mémoire de données de code source(3), et
- dont les fragments de programme (12) sont réunis comme code machine générique (5), et
- Où ce code machine (5) exécute des permutations, des calculs de reste de divisions, des décalages de bits et/ou permutation de groupe de bits dans la mémoire de données (6).
**caractérisé en ce que**
- l'initialisation de cette mémoire de données (6) par une séquence de nombres pseudo aléatoires produite par un autre générateur de nombre pseudo aléatoires (10) qui est contrôlé par un autre mot de passe (11).
- une ou plusieurs exécutions de ce code machine (5) généré par le compilateur (4) dans le processeur central d'un calculateur pour produire des nombres pseudo aléatoires à des buts cryptographiques.

2. Méthode de génération de nombres pseudo aléatoires pour des buts cryptographiques selon la revendication 1
**caractérisé en ce que** l'exécution du code machine peut être effectuée par un interpréteur.

3. Méthode de génération de nombres pseudo aléatoires pour des buts cryptographiques selon les revendications 1 et 2
**caractérisé en ce que** le nombre limité de fragments de programme cryptographique (12) qui sont assemblés par le compilateur (4) peut aussi bien exécuter des opérations cryptographiques autre que des permutations, des calculs de reste de divisions, des décalages de bits et/ou échanges des groupes de bits dans la mémoire (6); en particulier les calculs de codes CRC, calculs de formules mathématiques non linéaires et calculs linéaires congruents de nombre aléatoire.
